# EUROPEAN PATENT SPECIFICATION

(11) **EP 2 036 928 B1**
(45) Date of publication and mention of the grant of the patent: **23.12.2015**
(21) Application number: 07720696.9
(22) Date of filing: 06.04.2007
(51) Int. Cl.: C08F 4/02, C08F 4/654, C08F 110/06

(54) **MAGNESIUM HALIDE ADDUCT, OLEFINS POLYMERIZATION CATALYST COMPONENT AND CATALYST MADE THEREFROM**
MAGNESIUMHALOGENIDADDUKT, OLEFINPOLYMERISATIONSKATALYSATORKOMPONENTE UND DARAUS HERGSTELLTER KATALYSATOR
ADDUIT D'HALOGÉNURE DE MAGNÉSIUM, ÉLÉMENT CATALYSEUR DE POLYMÉRISATION D'OLÉFINES, ET CATALYSEUR ASSOCIÉ

(30) Priority: 06.04.2006 CN 200610067177; 20.10.2006 CN 200610113864
(43) Date of publication of application: 18.03.2009
(73) Proprietor: China Petroleum & Chemical Corporation, Beijing 100029 (CN); Beijing Research Institute of Chemical Industry, China Petroleum & Chemical Corporation, Chaoyang District Beijing 100013 (CN)
(72) Inventor: XIA, Xianzhi, Beijing 100013 (CN); LIU, Yuexiang, Beijing 100013 (CN); WANG, Xinsheng, Beijing 100013 (CN); ZHANG, Tianyi, Beijing 100013 (CN); GAO, Mingzhi, Beijing 100013 (CN); GAO, Ping, Beijing 100013 (CN); QIAO, Suzhen, Beijing 100013 (CN); YIN, Maoping, Beijing 100013 (CN); CHEN, Ying, Beijing 100013 (CN); PENG, Renqi, Beijing 100013 (CN); MA, Jing, Beijing 100013 (CN)
(74) Representative: Weickmann & Weickmann
(86) International application number: PCT/CN2007/001123
(87) International publication number: WO 2007/112700

(56) References cited:
- WO-A1-2004/054711
- WO-A1-2005/063832
- WO-A2-03/106514
- CN-A- 1 397 568
- CN-A- 1 563 112
- CN-A- 1 726 080
- US-A- 4 439 540
- US-A1- 2008 161 513
- DATABASE CA [Online] CHEMICAL ABSTRACTS SERVICE, COLUMBUS, OHIO, US; 25 June 1994 (1994-06-25), "Preparation of ultra-pure propylene polymers", XP002728913, retrieved from STN Database accession no. 1994:324435 -& JP 6 025352 A (HIMONT, INC., USA) 1 February 1994 (1994-02-01)

## Description

### Cross Reference of Related Applications

The present application claims the priority of the Chinese Patent Application No. 200610067177.9, filed on April 6, 2006, and the Chinese Patent Application No. 200610113864.X, filed on October 20, 2006.

### Field of the invention

The present invention relates to spherical magnesium halide complexes comprising a magnesium halide, an alcohol and a gem-dihydrocarbyloxy hydrocarbon, to spherical catalyst components and catalysts prepared from the spherical magnesium halide complexes, and to use of the catalysts in the polymerization of α-olefin CH₂=CHR or a mixture thereof, in which R is H, or alkyl or aryl having 1 to 12 carbon atoms.

### Background of the invention

Spherical magnesium halide-alcohol complexes and spherical Ziegler-Natta catalysts prepared by supporting titanium compounds and electron donor compounds thereon are well-known in the art. When used in olefin polymerization, in particular, propylene polymerization, such spherical catalysts exhibit relatively high catalytic activities and isotacticities, and the resultant polymers have good particle morphology and higher bulk densities.

Most of the known magnesium halide complexes are magnesium chloride-alcohol complexes comprising generally binary components of magnesium chloride and alcohol, and in some cases, the magnesium halide complexes further comprise a minor amount of water. Such magnesium halide complexes may be prepared by known processes, such as spray drying process, spray cooling process, high-pressure extruding process, or high-speed stirring process. The magnesium chloride-alcohol complexes are described in, for example, US 4,421,674, US 4,469,648, WO 87/07620, WO 93/11166, US 5,100,849, US 6,020,279, US 4,399,054, EP 0 395 383, US 6,127,304 and US 6,323,152.

When the catalysts prepared from such magnesium chloride-alcohol complexes are used in olefin polymerization, a cracking phenomenon of the catalyst particles takes place easily so that there are many polymer fines. The main reason might be that catalytic active sites formed in the complex supports by reacting the complexes with titanium halides and electron donor compounds are not uniformly distributed. In order to overcome this drawback, it has been attempted to incorporate electron donor compounds in the course of the preparation of the magnesium chloride-alcohol complex supports. For example, the techniques as disclosed in Chinese Patent ZL02136543.1 and CN1563112A introduce internal electron donors well-known in the art, such as phthalates, in the preparation of the supports so as to form spherical "magnesium chloride-alcohol-phthalate" multi-component supports, which react then with titanium tetrachloride to form catalysts. However, because the spherical multi-component supports are likely viscous during the preparation thereof, it is difficult to form spherical particles having a desired particle diameter (the disclosed spherical supports have average particle sizes, D50, in the range of from 70 to 200 microns). Furthermore, when used in propylene polymerization, the catalysts exhibit a catalytic activity of 406gPP/gcat. Therefore, the catalysts are not satisfied.

Moreover, when used in propylene polymerization, the catalysts prepared from the above magnesium chloride-alcohol complex supports exhibit un-satisfied hydrogen response so that they cannot meet the requirement of industrial scale production of polypropylene.

### Summary of the invention

The inventors diligently studied to solve the aforementioned problems. As a result, they have found out that introducing a gem-dihydrocarbyloxy hydrocarbon compound in the preparation of a magnesium halide complex may provide a novel particulate magnesium halide complex, which not only has a narrower particle size distribution and an easily controlled average particle size but also can be prepared by a simple process (this facilitates the industrial scale production of the complex). Meanwhile, when used in olefin polymerization, especially propylene polymerization, the olefin polymerization catalysts prepared therefrom exhibit very high activities and isotacticities, and better hydrogen response, and the resulting polymers have good particle morphology and less fines so that the catalysts are quite suitable for the industrial scale production of polypropylene. Furthermore, catalysts based on the combination of the supports of the invention and diether type internal electron donors have a characteristic that the polymerization rate decreases more slowly when used in propylene polymerization.

Thus, an object of the invention is to provide a spherical magnesium halide complex comprising a magnesium halide, an alcohol and a gem-dihydrocarbyloxy hydrocarbon.

Another object of the invention is to provide a process for preparing the spherical magnesium halide complex according to the invention.

Still another object of the invention is to provide a titanium-containing catalyst component for olefin polymerization, which is a reaction product of the spherical magnesium halide complex of the invention, at least one titanium compound, and optionally an internal electron donor.

Still another object of the invention is to provide a catalyst for olefin polymerization, comprising a reaction product of the following components:
a) the titanium-containing catalyst component according to the invention;
b) an alkylaluminum cocatalyst; and
c) optionally, an external electron-donor.

Still another object of the invention is to provide a process for polymerizing olefin CH₂=CHR, in which R is H, or alkyl or aryl having 1 to 12 carbon atoms, comprising contacting the olefin(s) with the catalyst according to the invention under polymerization conditions.

### Brief Description of the Drawings

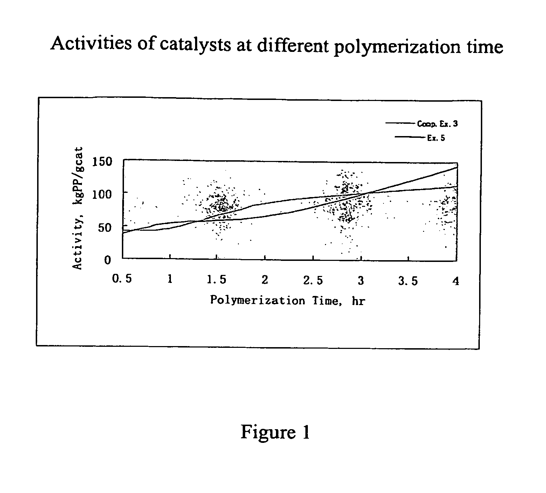

Figure 1 plots activities of the catalyst of Example 5 according to the invention and that of Comparative Example 3 at different polymerization time.

### Detailed description of the preferred embodiments

In the first aspect, the present invention provides a spherical magnesium halide complex comprising a magnesium halide, an alcohol and a gem-dihydrocarbyloxy hydrocarbon.

In an embodiment, the spherical magnesium halide complex has a composition represented by the formula (I):

MgX₂·mROH·nE·pH₂O (I)

wherein
X is chloride or bromide or a C₁-C₁₄ alkoxy or aryloxy, preferably chloride;
R is C₁-C₁₂ alkyl, C₃-C₁₀cycloalkyl or C₆-C₁₀aryl, preferably C₁-C₄alkyl;
E is a gem-dihydrocarbyloxy hydrocarbon represented by the formula (II): 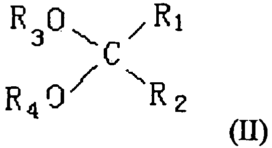
   wherein R₁ and R₂, which are identical or different, are hydrogen or C₁-C₁₀ linear or branched alkyl, C₃-C₁₀cycloalkyl, C₆-C₁₀aryl, C₇-C₁₀alkylaryl or arylalkyl, said aryl, alkylaryl and arylalkyl being optionally substituted by one or more halogen atoms on aromatic ring; R₁ and R₂ are optionally bonded to each other to form a ring or a fused ring system; R₃ and R₄ have the same meanings as defined for R₁ and R₂ other than hydrogen;
   m is in a range of from 1 to 5, preferably from 1.5 to 3.5;
   n is in a range of from 0.005 to 1.0, preferably from 0.02 to 0.3; and
   p is in a range of from 0 to 0.8.

In a preferred embodiment, in the gem-dihydrocarbyloxy hydrocarbon compounds of the formula (II), the R₁ and R₂, which are identical or different, are C₁-C₁₀ linear or branched alkyl. In another preferred embodiment, in the gem-dihydrocarbyloxy hydrocarbon compounds of the formula (II), the R₃ and R₄, which are identical or different, are C₁-C₁₀ linear or branched alkyl, or C₆-C₁₀aryl. In another preferred embodiment, the R₁, R₂, R₃ and R₄ are independently methyl, ethyl, propyl, isopropyl, butyl, isobutyl, tert-butyl, pentyl, isopentyl, cyclopentyl, hexyl, cyclohexyl, phenyl, halogen-substituted phenyl, tolyl, halogen-substituted tolyl, indenyl, benzyl or phenethyl. More preferably, the R₁ and R₂ are independently methyl, ethyl, propyl, butyl, pentyl, hexyl, isopropyl, isobutyl, or isopentyl.

Examples of the gem-dihydrocarbyloxy hydrocarbon compounds of the formula (II) include 2,2-dimethoxy propane, 2,2-dimethoxybutane, 2,2-dimethoxypentane, 3,3-dimethoxypentane, 2,2-diethoxypropane, 2,2-diethoxybutane, 2,2-diethoxypentane, 3,3-diethoxypentane, 2,2-diphenoxypropane, 1,1-dimethoxycyclopentane, 1,1-diethoxycyclopentane, 1,1-dimethoxycyclohexane, 1,1-diethoxycyclohexane, 2,2-dimethyl-1,3-dioxolane, 2-ethyl-2-methyl-1,3-dioxolane, 1,4-dioxa-spiro[4.4]nonane, 1,4-dioxa-spiro[4.5]decane, 2,2-dimethyl-1,3-dioxane, 2-ethyl-2-methyl-1,3-dioxane, 6,10-dioxa-spiro[4.5]decane, 1,5-dioxa-spiro[5.5]undecane, 2-methyl-1,4-dioxa-spiro[4.4]nonane, 2-methyl-1,4-dioxa-spiro[4.5]decane.

In a particularly preferred embodiment, the magnesium halide complex according to the invention has a composition represented by the formula (I),

MgX₂·mROH·nE·pH₂O (I)

wherein X is chloride, R is a C₁-C₄ alkyl, m is in a range of from 1.5 to 3.5, n is in a range of from 0.02 to 0.3, and E and p are as defined above.

The magnesium halide complex according to the invention can be prepared by processes known in the art for preparing magnesium halide-alcohol complexes, such as spray drying process, spray cooling process, high-pressure extruding process, or high-speed stirring process. Typically, a magnesium halide, an alcohol and a gem-dihydrocarbyloxy hydrocarbon compound contact and react with each other under heating condition, with the final reaction temperature being high enough to molten the complex of the magnesium halide, the alcohol and the gem-dihydrocarbyloxy hydrocarbon compound to form a melt, preferably reaching 100 to 140 °C, and then the melt of the complex is solidified to form solid particles. The contacting and reaction between the magnesium halide, the alcohol and the gem-dihydrocarbyloxy hydrocarbon compound are optionally performed in an inert liquid medium. The inert medium is generally an inert liquid aliphatic hydrocarbon solvent, such as kerosene, paraffin oil, vaseline oil, and white oil, and when necessary, contains optionally some amount of an organic silicon compound or a surfactant, such as dimethyl silicone oil.

The magnesium halides useful in the preparation of the magnesium halide complex according to the invention include magnesium dichloride, magnesium dibromide, and derivatives of magnesium dichloride and magnesium dibromide formed by replacing one or two halogen atoms of magnesium dichloride or magnesium dibromide with C₁-C₁₄ alkyl, aryl, alkoxy or aryloxy. Examples of the magnesium halides include magnesium dichloride, magnesium dibromide, phenoxy magnesium chloride, isopropoxy magnesium chloride, and butoxy magnesium chloride, with magnesium dichloride being preferred. The magnesium halides may be used alone or in combination.

The alcohols useful in the preparation of the magnesium halide complex according to the invention may be represented by formula ROH, wherein R is C₁-C₁₂ alkyl, C₃-C₁₀ cycloalkyl or C₆-C₁₀aryl, preferably C₁-C₄ alkyl. Examples of the alcohols include methanol, ethanol, n-propanol,isopropanol, n-butanol, iso-butanol, n-pentanol, iso-pentanol, n-hexanol, n-octanol, 2-ethylhexanol, ethylene glycol and propylene glycol.

In a preferred embodiment, the magnesium halide complex according to the invention may be prepared by a process comprising the steps of:
(i) preparing a melt of a magnesium halide complex by:
   in a closed reactor, mixing the magnesium halide, the alcohol, the gem-dihydrocarbyloxy hydrocarbon compound and an inert medium, and heating the resultant mixture to a temperature of from 100 to 140 °C while stirring, to form a melt of a magnesium halide complex,
   wherein the magnesium halide is added in an amount of from 0.1 to 1.0 mol/liter of the inert medium, and the alcohol and the gem-dihydrocarbyloxy hydrocarbon compound are added in an amount of from 1 to 5 moles and from 0.005 to 1 mole, respectively, with respect to one mole of the magnesium halide;
   wherein the inert medium is generally an inert aliphatic hydrocarbon solvent, such as kerosene, paraffin oil, vaseline oil and white oil, and when necessary, contains optionally an organic silicon compound, such as organic silicon oil, for example, dimethyl silicone oil; and
   wherein a trace amount of water contained in the magnesium halide and the alcohol may participate in the reaction for forming the complex; and during the preparation of the magnesium halide complex, the order of the addition of individual raw materials is arbitrary; and
(ii) forming spherical particles of the magnesium halide complex by:
   applying shearing action on the above melt of the magnesium halide complex and then discharging it into a cooling medium, to form spherical particles of the magnesium halide complex,
   wherein the application of the shearing action may be accomplished by a conventional method, such as by a high-speed stirring process (see, for example, CN 1330086) or a spraying process (see, for example, US 6,020,279), or through a super-gravity rotary bed (see, for example, CN 1580136A) or an emulsification apparatus (see, for example, CN 1463990A);
   wherein the cooling medium may be an inert hydrocarbon solvent having a relatively low boiling point, such as pentane, hexane, heptane, gasoline, and petroleum ether, and is controlled at a temperature of from -60 °C to 30 °C, preferably from -40 °C to 0 °C, prior to its contacting with the magnesium halide complex melt stream.

After washed with an inert hydrocarbon solvent and dried, the above-prepared spherical particles of the magnesium halide complex may be used in the preparation of catalyst components for olefin polymerization.

In the second aspect, the present invention provides a titanium-containing catalyst component for olefin polymerization, which comprises a reaction product of the spherical magnesium halide complex of the invention, at least one titanium compound, and optionally an internal electron donor.

The titanium compound may be selected from those represented by formula TiX₃ or Ti(OR³)₄₋ₘXₘ, in which R³(s) is/are independently C₁-C₁₄ aliphatic hydrocarbyl group, X(s) is/are independently F, Cl, Br or I, and m is an integer of from 1 to 4. Examples of the titanium compound include titanium tetrachloride, titanium tetrabromide, titanium tetraiodide, tetrabutoxy titanium, tetraethoxy titanium, tributoxy titanium chloride, dibutoxy titanium dichloride, butoxy titanium trichloride, triethoxy titanium chloride, diethoxy titanium dichloride, ethoxy titanium trichloride, titanium trichloride, and mixtures thereof, with titanium tetrachloride being preferred.

Use of internal electron donor compounds in catalyst components for olefin polymerization is well known in the art. In particular, the incorporation of an internal electron donor compound in a catalyst component for propylene polymerization may be quite necessary, in order to obtain propylene polymers having high isotacticity. All internal electron-donor compounds commonly used in the art can be used in the present invention.

Suitable internal electron donor compounds include esters, ethers, ketones, amines, and silanes.

Preferred ester compounds include esters of aliphatic and aromatic mono- and poly-basic carboxylic acids, such as benzoates, phthalates, malonates, succinates, glutarates, pivalates, adipates, sebacates, maleates, naphthalene dicarboxylates, trimellitates, benzene-1,2,3-tricarboxylates, pyromellitates and carbonates. Examples include ethyl benzoate, diethyl phthalate, di-iso-butyl phthalate, di-n-butyl phthalate, di-iso-octyl phthalate, di-n-octyl phthalate, diethyl malonate, dibutyl malonate, diethyl 2,3-di-iso-propylsuccinate, di-iso-butyl 2,3-di-iso-propylsuccinate, di-n-butyl 2,3-diisopropylsuccinate, dimethyl 2,3-di-iso-propylsuccinate, di-iso-butyl 2,2-dimethylsuccinate, di-iso-butyl 2-ethyl-2-methylsuccinate, diethyl 2-ehtyl-2-methylsuccinate, diethyl adipate, dibutyl adipate, diethyl sebacate, dibutyl sebacate, diethyl maleate, di-n-butyl maleate, diethyl naphthalene dicarboxylate, dibutyl naphthalene dicarboxylate, triethyl trimellitate, tributyl trimellitate, triethyl benzene-1,2,3-tricarboxylate, tributyl benzene-1,2,3-tricarboxylate, tetraethyl pyromellitate, tetrabutyl pyromellitate.

Preferred ester compounds further include esters of polyols represented by the general formula (III), 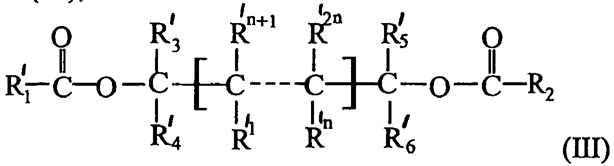 wherein R'₁ to R'₆ and R'₁ to R'²ⁿ, which are identical or different, are hydrogen, halogen, or optionally substituted linear or branched C₁-C₂₀ alkyl, C₃-C₂₀ cycloalkyl, C₆-C₂₀ mono-ring or multi-ring aryl, C₇-C₂₀ alkylaryl, C₇-C₂₀ arylalkyl, C₂-C₁₀ alkenyl, or C₂-C₁₀ ester group, with the proviso that R'₁ and R'₂ are not hydrogen; R'₃ to R'₆ and R'¹ to R'²ⁿ optionally comprise one or more heteroatoms, which are selected from the group consisting of nitrogen, oxygen, sulfur, silicon, phosphorus and halogen, replacing carbon or hydrogen or the both; and one or more of R'₃ to R'₆ and R'¹ to R'²ⁿ are optionally linked to form a ring; and n is an integer ranging from 0 to 10.

Such ester compounds of polyols are disclosed in detail in WO 03/068828 and WO 03/068723.

Among said ester compounds of polyols, the preferred are those of the general formula (IV), 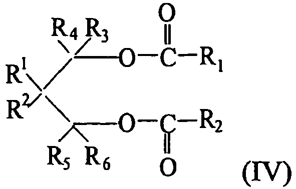 wherein R₁ to R₆ and R¹ to R² are as defined in the general formula (III).

For the ester compounds of polyols represented by the general formulae (III) and (IV), it is preferred that R₃, R₄, R₅ and R₆ are not simultaneously hydrogen, and at least one of R₃, R₄, R₅ and R₆ is selected from the group consisting of halogen, C₁-C₁₀ linear or branched alkyl, C₃-C₁₀ cycloalkyl, C₆-C₁₀ aryl, C₇-C₁₀ alkylaryl and arylalkyl.

Among said ester compounds of polyols of the formula (III), the preferred are also those of the general formula (V): 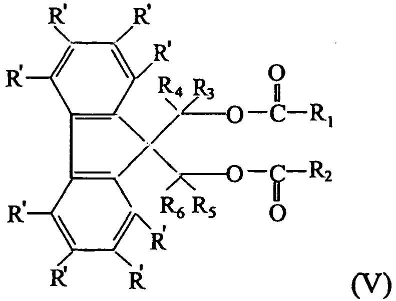 wherein R₁-R₆ are as defined in the general formula (III); R's are identical or different, and are hydrogen, halogen, linear or branched C₁-C₂₀ alkyl, C₃-C₂₀ cycloalkyl, C₆-C₂₀ aryl, C₇-C₂₀ alkylaryl, or C₇-C₂₀ arylalkyl.

For the ester compounds of polyols represented by the formulae (III), (IV) and (V), it is preferred that at least one of R₁ and R₂ is selected from the group consisting of phenyl, halophenyl, alkylphenyl and haloalkyl-phenyl.

The preferred ether compounds include 1,3-diether compounds represented by the general formula (VI): 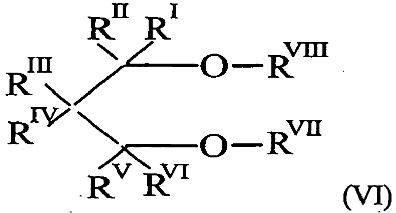 wherein R^{I}, R^{II}, R^{III}, R^{IV}, R^{V} and R^{VI}, which are identical or different, are selected from the group consisting of hydrogen, halogen, linear or branched C₁-C₂₀ alkyl, C₃-C₂₀ cycloalkyl, C₆-C₂₀ aryl, C₇-C₂₀ alkylaryl and C₇-C₂₀ arylalkyl; and R^{VII} and R^{VIII}, which are identical or different, are selected from the group consisting of linear or branched C₁-C₂₀ alkyl, C₃-C₂₀ cycloalkyl, C₆-C₂₀ aryl, C₇-C₂₀ alkylaryl and C₇-C₂₀ arylalkyl; and two or more of R^{I} to R^{VI} may be bonded to each other to form a ring. Those 1,3-diethers wherein R^{VII} and R^{VIII} are independently C₁-C₄ alkyl are preferred. Such 1,3-diether compounds are disclosed in Chinese Patent ZL89108368.5 and CN1141285A.

The titanium-containing catalyst component for olefin polymerization according to the invention may be prepared by methods known in the art, for example, by reacting the particulate magnesium halide complex with a titanium compound. In a preferred embodiment, the titanium-containing catalyst component for olefm polymerization according to the invention is prepared by a method comprising the steps of: suspending the magnesium halide complex of the invention in chilled titanium tetrachloride or a mixture of titanium tetrachloride and an inert solvent, with the temperature of the liquid being generally in a range of from -30°C to 0°C, preferably from -20°C to -10°C; then heating the resulting mixture to a temperature of from 40°C to 130°C, preferably from 60°C to 120°C, and maintaining at that temperature for 0.5 to 2.0 hours; and then filtering off the liquid and recovering the solids. Such treatment with titanium tetrachloride may be performed for one or more times, and preferably for 2 to 4 times. The inert solvent is preferably an aliphatic or aromatic hydrocarbon, such as hexane, heptane, octane, decane, and toluene.

Before, during or after the reaction between the particulate magnesium halide complex and the titanium compound, at least one internal electron donor compound may be used to treat the magnesium halide complex.

In the preparation of the titanium-containing catalyst component according to the invention, the titanium compound is used in an amount of from 5 to 50 moles, with respect to one mole of magnesium halide in the magnesium halide complex; and the internal electron donor compound is used in an amount of from 0 to 1.0 mole, preferably from 0.01 to 0.5 moles, with respect to one mole of magnesium halide in the magnesium halide complex.

In the third aspect, the present invention provides a catalyst for olefin polymerization, comprising a reaction product of the following components:
a) the titanium-containing catalyst component according to the present invention (active component);
b) an alkylaluminum cocatalyst, represented by formula AlR¹ₙX₃₋ₙ, wherein R¹(s) is/are independently C₁-C₈ linear, branched or cyclic alkyl; X is halide, preferably chloride; and n = 1, 2 or 3. The preferred are triethyl aluminum, triisobutyl aluminum, tri-n-butyl aluminum, tri-n-hexyl aluminum, tri-n-octyl aluminum, alkyl aluminum chlorides, such as AlEt₂Cl. These alkylaluminum compounds can be used alone or in combination. In general, the alkylaluminum compounds are used in such an amount that molar ratio of Al/Ti is in a range of from 1 to 1000; and
c) optionally, an external electron-donor compound, such as mono- or multifunctional carboxylic acids, carboxylic anhydrides, and esters of carboxylic acids, ketones, ethers, alcohols, lactones, organic phosphorus compounds, and organic silicon compounds, in an amount ranging from 0.005 to 0.5 moles, preferably from 0.01 to 0.25 moles, with respect to one mole of the alkylaluminum compound.

Preferred external electron-donor compounds include silicon compounds of formula R¹ₐR²_{b}Si(OR³)_{c}, wherein a and b are independently an integer of from 0 to 2, c is an integer of from 1 to 3, and the sum of (a+b+c) is 4; R¹, R² and R³ are independently C₁-C₁₈ hydrocarbyl optionally containing heteroatom(s). Among these silicon compounds, those wherein a is 1, b is 1, c is 2, at least one of R¹ and R² is selected from the group consisting of branched alkyl, alkenyl, cycloalkyl or aryl having 3 to 10 carbon atoms and optionally containing heteroatom(s), and R³ is a C₁-C₁₀ alkyl, especially methyl, are particularly preferred. Examples of such silicon compounds include cyclohexyl methyl dimethoxy silane, diisopropyl dimethoxy silane, di-n-butyl dimethoxy silane, di-iso-butyl dimethoxy silane, diphenyl dimethoxy silane, methyl tert-butyl dimethoxy silane, dicyclopentyl dimethoxy silane, 2-ethylpiperidino tert-butyl dimethoxy silane, 1,1,1-trifluoro-2-propyl 2-ethylpiperidino dimethoxy silane and 1,1,1-trifluoro-2-propyl methyl dimethoxy silane. Additionally, those silicon compounds wherein a is 0, c is 3, R² is a branched alkyl or cycloalkyl optionally containing heteroatom(s), and R³ is methyl are also preferred. Examples of such silicon compounds include cyclohexyl trimethoxy silane, tert-butyl trimethoxy silane and tert-hexyl trimethoxy silane.

Preferred external electron-donor compounds include also the aforementioned 1,3-diether compounds of the formula (VI), among which 2-isopentyl-2-isopropyl-1,3-dimethoxypropane and 9,9-bis(methoxymethyl)fluorene are particularly preferred.

The alkyl aluminium cocatalysts b) and the optional external electron-donor compounds c) can contact and react with the active component a) separately or as a mixture.

The catalysts of the invention are useful in polymerization of olefm CH₂=CHR (wherein R is H, or alkyl or aryl having 1 to 12 carbon atoms) or a feed containing said olefin and a small amount of diene, if necessary.

Thus, in the fourth aspect, the present invention provides a process for polymerizing olefin, comprising contacting an olefin of formula CH₂=CHR, wherein R is H, or alkyl or aryl having 1 to 12 carbon atoms, and optionally another kind of said olefin as comonomer, and optionally a diene as a second comonomer, with the catalysts of the invention under polymerization conditions.

The polymerization of olefin(s) is carried out in liquid phase of liquid monomer or a solution of monomer in an inert solvent, or in gas phase, or in a combination of gas phase and liquid phase, according to the known processes. The polymerization is generally carried out at a temperature of from 0°C to 150°C, preferably from 60°C to 100°C, and at normal or higher pressure.

Without limited by any theory, it is believed that, because the active sites in the catalysts prepared from the spherical magnesium halide complexes of the invention are distributed uniformly, polymer fines, which are generally considered as being resulted from cracking of catalyst particles, are substantially reduced, when the catalysts are used in olefin polymerization, especially propylene polymerization. Meanwhile, the catalysts exhibit better hydrogen response, and very high activities and isotacticities.

### Examples

The following examples are provided to further illustrate the present invention.

### Testing methods:

1. Melt index of polymers: ASTM D 1238-99.
2. Isotacticity of polymers: measured by heptane extraction method carried out as follows: 2 g of dry polymer sample is extracted with boiling heptane in an extractor for 6 hours, then the residual substance is dried to constant weight, and the ratio of the weight of the residual polymer (g) to 2 is regarded as isotacticity.
3. Particle size distribution: average particle size and particle size distribution of the particulate magnesium halide complexes are measured on Masters Sizer Model 2000 (manufactured by Malvern Instruments Co., Ltd.).

### Example 1

### A.Preparation of spherical magnesium chloride complex

To a 1L autoclave were charged with 110 ml of white oil (having a rotational viscosity of 13-16m/s at 25 °C, obtained from Hengshun Petroleum and Chemical Corp., Fushun, Liaoning), 220 ml of dimethyl silicone oil (having a rotational viscosity of 350-400m/s at 25 °C, obtained from the Second Chemical Factory of Beijing, Beijing), 15 g of magnesium chloride, 28 ml of ethanol and 4ml of 2,2-dimethoxy propane. The mixture was heated to 125 °C while stirring at 300 rpm and maintained at that temperature for 3 hours. Then the mixture was passed through an emulsifier in line (Model WL 500 CY emulsifier obtained from Shanghai High-shearing Homogenizer Co., Ltd.) and discharged into 3 liters of hexane which had previously been cooled to -30°C. After filtering off the liquid, the solids were washed with hexane thrice and then dried under vacuum, to give 30.3g of spherical magnesium chloride complex, which was found to have an average particle diameter of 50 micrometers.

### B. Preparation of spherical catalyst component

To a 300 ml glass reactor was charged with 100 ml of titanium tetrachloride, and the content was cooled to -20°C. Then 8 g of the above-prepared spherical magnesium chloride complex was added to the reactor, and the reaction mixture was heated to 100 °C over 3 hours, and 1.5ml of di-iso-butyl phthalate was added thereto during the heating. Then the mixture was maintained at 100 °C for 0.5 hours, followed by filtering off the liquid. The residual solids were washed with titanium tetrachloride twice and with hexane thrice, and then dried under vacuum, to give a spherical catalyst component.

### C. Propylene polymerization

To a 5L autoclave were added 2.5 liters of propylene, 1mmol of triethyl aluminium, 0.05mmol of cyclohexyl methyl dimethoxy silane (CHMMS), 10mg of the above spherical catalyst component, and 1.5 liters (standard volume) of hydrogen gas. Then the content was heated to 70°C and allowed to polymerize for 1 hour. The results are shown in the below Table 1 and Table 2.

### Example 2

Propylene polymerization was carried out using the catalyst component prepared in Example 1 according to the same procedure as described in Example 1.C, except for that the amount of hydrogen gas was changed to 5.0 liters (standard volume). The results are shown in the below Table 1 and Table 2.

### Example 3

### A. Preparation of spherical magnesium chloride complex

A spherical magnesium chloride complex was prepared according to the same procedure as described in Example 1.A, except for that the amount of 2,2-dimethoxy propane was changed to 6ml. 31 Grams of spherical magnesium chloride complex were obtained and found to have an average particle diameter of 61 micronmeters.

### B. Preparation of spherical catalyst component

A spherical catalyst component was prepared according to the same procedure as described in Example 1.B, except for that the spherical magnesium chloride complex as prepared in the above A was used to replace the spherical magnesium chloride complex as prepared in Example 1.A.

### C. Propylene polymerization

Propylene polymerization was carried out using the catalyst component prepared in the above B according to the same procedure as described in Example 1.C. The results are shown in the below Table 1 and Table 2.

### Example 4

Propylene polymerization was carried out using the catalyst component prepared in Example 3 according to the same procedure as described in Example 1.C, except for that the amount of hydrogen gas was changed to 5.0 liters (standard volume). The results are shown in the below Table 1 and Table 2.

### Comparative Example 1

### A. Preparation of spherical magnesium chloride complex

A spherical magnesium chloride complex was prepared according to the same procedure as described in Example 1.A, except for that no 2,2-dimethoxy propane was used

### B. Preparation of spherical catalyst component

A spherical catalyst component was prepared according to the same procedure as described in Example 1.B, except for that the spherical magnesium chloride complex as prepared in the above A was used to replace the spherical magnesium chloride complex as prepared in Example 1.A.

### C. Propylene polymerization

Propylene polymerization was carried out using the catalyst component prepared in the above B according to the same procedure as described in Example 1.C. The results are shown in the below Table 1 and Table 2.

### Comparative Example 2

Propylene polymerization was carried out using the catalyst component prepared in Comparative Example 1 according to the same procedure as described in Example 1.C, except for that the amount of hydrogen gas was changed to 5.0 liters (standard volume). The results are shown in the below Table 1 and Table 2.

**Table 1 Properties of the Catalysts**

| Example No. | Activity kgPP/gcat | Isotacticity Index of Polymer % | MI of Polymer g/10min |
|---|---|---|---|
| Example 1 | 47.0 | 98.5 | 3.9 |
| Example 2 | 54.2 | 97.1 | 26 |
| Example 3 | 47.1 | 98.1 | 4.8 |
| Example 4 | 54.7 | 97.3 | 30 |
| Comparative Example 1 | 48.2 | 98.2 | 2.9 |
| Comparative Example 2 | 51.3 | 97.1 | 21 |

**Table 2 Particle Size Distribution of Polymers**

| Example No. | Above 2mm wt% | 2 to 0.9mm wt% | 0.9 to 0.43mm wt% | 0.43 to 0.3mm wt% | Below 0.3mm wt% |
|---|---|---|---|---|---|
| Example 2 | 18.3 | 67.5 | 10.9 | 1.6 | 1.7 |
| Example 4 | 22.8 | 69.3 | 7.0 | 0.4 | 0.5 |
| Comparative Example 2 | 10.0 | 37.3 | 42.1 | 4.5 | 6.6 |

From the data shown in the Table 1, it can be seen that, when used in propylene polymerization, the catalysts prepared from the magnesium chloride complexes according to the invention exhibit higher catalytic activities, and in particular, better hydrogen response.

From the data shown in the Table 2, it can be seen that the polymers, which are obtained from propylene polymerization using the catalysts prepared from the magnesium chloride complexes according to the invention, have less fines, that indicates that cracking of the catalyst particles is substantially reduced.

### Example 5

### A. Preparation of spherical magnesium chloride complex

To a 150L reactor were charged with 20 liters of white oil (having a rotational viscosity of 13-16m/s at 25 °C, obtained from Hengshun Petroleum and Chemical Corp., Fushun, Liaoning), 80 liters of dimethyl silicone oil (having a rotational viscosity of 350-400m/s at 25 °C, obtained from the Second Chemical Factory of Beijing, Beijing), 7 Kg of magnesium chloride, 11.3 liters of ethanol and 1.8 liters of 2,2-dimethoxy propane. The mixture was heated to 125 °C while stirring and maintained at that temperature for 3 hours. Then the mixture was passed through a super-gravity rotary bed (from Beijing Research Institute of Chemical Industry, Sinopec., Beijing) and discharged into 1000 liters of hexane which had previously been cooled to -30°C. After filtering off the liquid, the solids were washed with hexane thrice and then dried under vacuum, to give a spherical solid magnesium chloride complex.

### B. Preparation of spherical catalyst component

To a 300 ml glass reactor was charged with 100 ml of titanium tetrachloride, and the content was cooled to -20°C. Then 8 g of the above-prepared spherical magnesium chloride complex was added to the reactor, and the reaction mixture was heated to 110 °C over 3 hours, and 1.5ml of 2-isopentyl-2-isopropyl-1,3-dimethoxy propane was added thereto during the heating. After filtering off the liquid, the residual solids were washed with titanium tetrachloride twice and with hexane thrice, and then dried under vacuum, to give a spherical catalyst component.

### C. Propylene polymerization

To a 5L autoclave were added 2.5 liters of propylene, 1mmol of triethyl aluminium, 0.05mmol of CHMMS, 10mg of the above spherical catalyst component, and 1.5 liters (standard volume) of hydrogen gas. Then the content was heated to 70°C and allowed to polymerize for 1 hour. The results are shown in the below Table 3.

### Example 6

Propylene polymerization was carried out using the catalyst component prepared in Example 5 according to the same procedure as described in Example 5.C, except for that the amount of hydrogen gas was changed to 5.0 liters (standard volume). The results are shown in the below Table 3.

### Example 7

Four runs of propylene polymerization were carried out using the catalyst component prepared in Example 5 according to the same procedure as described in Example 5.C, except for that the polymerization time was changed to 0.5, 2, 3, and 4 hours, respectively. The results are shown in the below Table 3.

### Comparative Example 3

### A. Preparation of spherical magnesium chloride complex

To a 150L reactor were charged with 20 liters of white oil, 80 liters of dimethyl silicone oil, 7 Kg of magnesium chloride, and 11.3 liters of ethanol. The mixture was heated to 125 °C while stirring and maintained at that temperature for 3 hours. Then the mixture was passed through a super-gravity rotary bed (from Beijing Research Institute of Chemical Industry, Sinopec., Beijing) and discharged into 1000 liters of hexane which had previously been cooled to -30°C. After filtering off the liquid, the solids were washed with hexane thrice and then dried under vacuum, to give a spherical solid magnesium chloride complex.

### B. Preparation of spherical catalyst component

A spherical catalyst component was prepared according to the same procedure as described in Example 5.B, except for that the spherical magnesium chloride complex as prepared in the above A was used to replace the spherical magnesium chloride complex as prepared in Example 5.A.

### C. Propylene polymerization

Propylene polymerization was carried out using the catalyst component prepared in the above B according to the same procedure as described in Example 5.C. The results are shown in the below Table 3.

### Comparative Example 4

Propylene polymerization was carried out using the catalyst component prepared in Comparative Example 3 according to the same procedure as described in Example 5.C, except for that the amount of hydrogen gas was changed to 5.0 liters (standard volume). The results are shown in the below Table 3.

### Comparative Example 5

Four runs of propylene polymerization were carried out using the catalyst component prepared in Comparative Example 3 according to the same procedure as described in Example 5.C, except for that the polymerization time was changed to 0.5, 2, 3, and 4 hours, respectively. The results are shown in the below Table 3.

**Table 3 Properties of the catalysts**

| Example No. | Hydrogen added in the polymerization L | Polymerization time hr | Activity kgPP/gcat | I.I of polymers % | MI of polymers g/10min |
|---|---|---|---|---|---|
| Example 5 | 1.5 | 1 | 54.2 | 98.9 | 5.1 |
| Example 6 | 5.0 | 1 | 79.9 | 97.8 | 42 |
| Example 7 | 1.5 | 0.5 | 37.5 | 97.9 | 7.2 |
| | 1.5 | 2 | 65.7 | 98.5 | 4.8 |
| | 1.5 | 3 | 100 | 98.6 | 6.3 |
| | 1.5 | 4 | 144 | 98.3 | 8.6 |
| Comparative Example3 | 1.5 | 1 | 45.5 | 98.6 | 7.7 |
| Comparative Example4 | 5.0 | 1 | 76.5 | 97.3 | 51 |
| Comparative Example5 | 1.5 | 0.5 | 42.2 | 97.9 | 6.5 |
| | 1.5 | 2 | 85.7 | 98.1 | 4.1 |
| | 1.5 | 3 | 103 | 98.6 | 6.9 |
| | 1.5 | 4 | 114 | 98.7 | 7.9 |

From the data shown in the Table 3, it can be seen that the catalyst based on the combination of the support according to the invention and the diether type internal electron donor remains the characteristics of catalysts containing a diether type internal electron donor, such as higher activity and better hydrogen response, when the catalyst is used in propylene polymerization.

From the data shown in the Table 3 and Figure 1, it can be seen that, when used in propylene polymerization, the catalyst based on the combination of the support according to the invention and the diether type internal electron donor has a characteristic that the polymerization rate decreases more slowly so that it is particularly suitable for a polymerization process having multiple reactors in series, facilitating to make productivities of the reactors matching and enhance output of polypropylene plants.

## Claims

1. A magnesium halide complex, having a composition represented by the formula (I):
MgX₂·mROH·nE·pH₂O (I)
wherein
X is chloride, bromide, or a C₁-C₁₄ alkoxy or aryloxy;
R is C₁-C₁₂ alkyl, C₃-C₁₀cycloalkyl or C₆-C₁₀aryl;
E is a gem-dihydrocarbyloxy hydrocarbon represented by the formula (II): 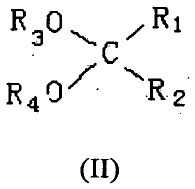
wherein the R₁ and R₂, which are identical or different, are hydrogen or C₁-C₁₀ linear or branched alkyl, C₃-C₁₀ cycloalkyl, C₆-C₁₀ aryl, C₇-C₁₀ alkylaryl or arylalkyl, said aryl, alkylaryl and arylalkyl being optionally substituted by one or more halogen atoms on aromatic ring; the R₁ and R₂ are optionally bonded to each other to form a ring or a fused ring system; the R₃ and R₄ have the same meanings as defined for the R₁ and R₂ other than hydrogen;
m is in a range of from 1 to 5;
n is in a range of from 0.005 to 1.0; and
p is in a range of from 0 to 0.8.

2. The magnesium halide complex according to claim 1, wherein R is a C₁-C₄ alkyl.

3. The magnesium halide complex according to claim 1 or 2, wherein in the formula (II), the R₁ and R₂, which are identical or different, are C₁-C₁₀ linear or branched alkyl; and the R₃ and R₄, which are identical or different, are C₁-C₁₀ linear or branched alkyl, or C₆-C₁₀ aryl.

4. The magnesium halide complex according to any one of claims 1-3, wherein m is in a range of from 1.5 to 3.5, and n is in a range of from 0.02 to 0.3.

5. The magnesium halide complex according to claim 1, wherein R is a C₁-C₄ alkyl, X is chloride, m is in a range of from 1.5 to 3.5, and n is in a range of from 0.02 to 0.3.

6. A process for preparing the magnesium halide complex according to claim 1, which process comprises the steps of:
(i) preparing a melt of a magnesium halide complex by:
in a closed reactor, mixing a magnesium halide, an alcohol, a gem-dihydrocarbyloxy hydrocarbon compound and an inert medium, and heating the resultant mixture while stirring to a temperature of from 100 to 140 °C, to form a melt of a magnesium halide complex,
wherein the magnesium halide is selected from the group consisting of magnesium dichloride, magnesium dibromide, and derivatives of magnesium dichloride and magnesium dibromide formed by replacing one or two halogen atoms of magnesium dichloride or magnesium dibromide with C₁-C₁₄ alkyl, aryl, alkoxy or aryloxy;
wherein the alcohol is represented by formula ROH, in which R is C₁-C₁₂ alkyl, C₃-C₁₀ cycloalkyl or C₆-C₁₀ aryl;
wherein the gem-dihydrocarbyloxy hydrocarbon compound having a general formula (II): 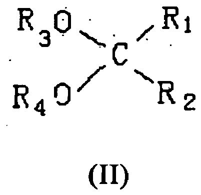 in which the R₁ and R₂, which are identical or different, are hydrogen or C₁-C₁₀ linear or branched alkyl, C₃-C₁₀ cycloalkyl, C₆-C₁₀ aryl, C₇-C₁₀ alkylaryl or arylalkyl, said aryl, alkylaryl and arylalkyl being optionally substituted by one or more halogen atoms on aromatic ring; the R₁ and R₂ are optionally bonded to each other to form a ring or a fused ring system; the R₃ and R₄ have the same meanings as defined for R₁ and R₂ other than hydrogen;
wherein the inert medium is selected from the group consisting of kerosene, paraffin oil, vaseline oil and white oil, and contains optionally organic silicon compound; and
wherein the magnesium halide is added in an amount of from 0.1 to 1.0 mol/liter of the inert medium, and the alcohol and the gem-dihydrocarbyloxy hydrocarbon compound are added in an amount of from 1 to 5 moles and from 0.005 to 1 mole, respectively, with respect to one mole of magnesium halide; and
(ii) forming particles of the magnesium halide complex by:
applying shearing action on the above melt of the magnesium halide complex and then discharging it into a cooling medium, to form spherical particles of the magnesium halide complex, wherein the cooling medium is controlled at a temperature of from -60 °C to 30 °C prior to its contacting with the magnesium halide complex melt stream.

7. A catalyst component useful in olefin polymerization, comprising a reaction product of the magnesium halide complex according to claim 1, at least one titanium compound, and an optional internal electron donor.

8. The catalyst component according to claim 7, wherein in the formula (I), R is a C₁-C₄ alkyl.

9. The catalyst component according to claim 7 or 8, wherein in the formula (II), R₁ and R₂, which are identical or different, are C₁-C₁₀ linear or branched alkyl; and R₃ and R₄, which are identical or different, are C₁-C₁₀ linear or branched alkyl, or C₆-C₁₀ aryl.

10. The catalyst component according to any one of claims 7-9, wherein in the formula (I), m is in a range of from 1.5 to 3.5, and n is in a range of from 0.02 to 0.3.

11. The catalyst component according to claim 7, wherein in the formula (I), R is a C₁-C₄ alkyl, X is chloride, m is in a range of from 1.5 to 3.5, and n is in a range of from 0.02 to 0.3.

12. The catalyst component according to any one of claims 7-11, wherein the titanium compound is at least one represented by formula TiX₃ or formula Ti(OR³)₄₋ₘXₘ, in which R³(s) is/are independently C₁-C₁₄ aliphatic hydrocarbyl, X(s) is/are independently F, Cl, Br or I, and m is an integer of from 1 to 4.

13. The catalyst component according to any one of claims 7-12, wherein the internal electron donor is selected from the group consisting of esters, ethers, ketones and amines.

14. The catalyst component according to any one of claims 7-12, wherein the internal electron donor is at least one selected from the group consisting of esters of aliphatic and aromatic mono- and poly-basic carboxylic acids, esters of aliphatic and aromatic polyols, and di-ethers.

15. The catalyst component according to claim 14, wherein the internal electron donor is at least one selected from the group consisting of:
benzoates, phthalates, malonates, succinates, glutarates, pivalates, adipates, sebacates, maleates, naphthalene dicarboxylates, trimellitates, benzene-1,2,3-tricarboxylates, pyromellitates and carbonates;
esters of polyols represented by the general formula (III), 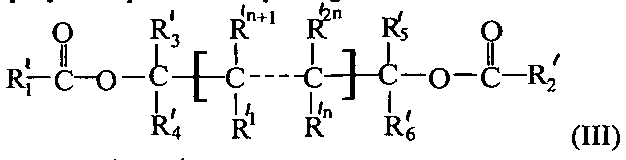 wherein R'₁ to R'₆ and R'¹ to R'²ⁿ, which are identical or different, are hydrogen, halogen, or optionally substituted linear or branched C₁-C₂₀ alkyl, C₃-C₂₀ cycloalkyl, C₆-C₂₀ mono-ring or multi-ring aryl, C₇-C₂₀ alkylaryl, C₇-C₂₀ arylalkyl, C₂-C₁₀ alkenyl, or C₂-C₁₀ ester group, with the proviso that R'₁ and R'₂ are not hydrogen; R'₃ to R'₆ and R'¹ to R'²ⁿ optionally comprise one or more heteroatoms, which are selected from the group consisting of nitrogen, oxygen, sulfur, silicon, phosphorus and halogen, replacing carbon or hydrogen or the both, and one or more of R₃ to R'₆ and R'¹ to R'²ⁿ are optionally linked to form a ring; and n is an integer ranging from 0 to 10; and
1,3-diether compounds represented by the general formula (VI), 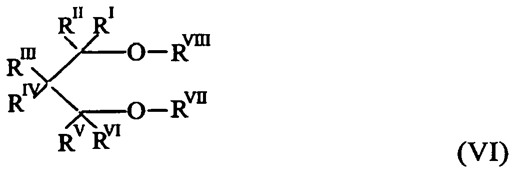 wherein R^{I}, R^{II}, R^{III}, R^{IV}, R^{V} and R^{VI}, which are identical or different, are selected from the group consisting of hydrogen, halogen, linear or branched C₁-C₂₀ alkyl, C₃-C₂₀ cycloalkyl, C₆-C₂₀ aryl, C₇-C₂₀ alkylaryl and C₇-C₂₀ arylalkyl, and R^{VII} and R^{VIII}, which are identical or different, are selected from the group consisting of linear or branched C₁-C₂₀ alkyl, C₃-C₂₀ cycloalkyl, C₆-C₂₀ aryl, C₇-C₂₀ alkylaryl and C₇-C₂₀ arylalkyl; and two or more of R^{I} to R^{VI} are optionally bonded to each other to form a ring.

16. A catalyst for the polymerization of an olefin of formula CH₂=CHR, wherein R is H, or alkyl or aryl having 1 to 12 carbon atoms, comprising a reaction product of the following components:
a) the catalyst component according to any one of claims 7 to 15;
b) an alkylaluminum cocatalyst; and
c) optionally, an external electron-donor.

17. A process for polymerizing olefin, comprising contacting an olefin of formula CH₂=CHR, wherein R is H, or alkyl or aryl having 1 to 12 carbon atoms, and optionally another kind of said olefin as comonomer, and optionally a diene as a second comonomer, with the catalyst according to claim 16 under polymerization conditions.

## Patentansprüche

1. Magnesiumhalogenidkomplex mit einer Zusammensetzung, dargestellt durch die Formel (I):
**MgX₂·mROH·nE·pH₂O** **(I)**
wobei
X Chlorid, Bromid oder ein C₁-C₁₄ Alkoxy oder Aryloxy ist;
R C₁-C₁₂ Alkyl, C₃-C₁₀ Cycloalkyl oder C₆-C₁₀ Aryl ist;
E ein gem-Dihydrocarbyloxy-Kohlenwasserstoff ist, dargestellt durch die Formel (II): 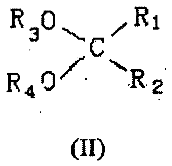
wobei das R₁ und R₂, die identisch oder unterschiedlich sind, Wasserstoff oder C₁-C₁₀ lineares oder verzweigtes Alkyl, C₃-C₁₀ Cycloalkyl, C₆-C₁₀ Aryl, C₇-C₁₀ Alkylaryl oder Arylalkyl sind, wobei das Aryl, Alkylaryl und Arylalkyl optional durch ein oder mehrere Halogenatome am aromatischen Ring substituiert sind; das R₁ und R₂ optional aneinander gebunden sind, um einen Ring oder ein fusioniertes Ringsystem zu bilden; das R₃ und R₄ die gleiche Bedeutungen haben, wie sie für das R₁ und R₂ definiert sind, mit Ausnahme von Wasserstoff;
m in einem Bereich von 1 bis 5 ist;
n in einem Bereich von 0,005 bis 1,0 ist; und
p in einem Bereich von 0 bis 0,8 ist.

2. Magnesiumhalogenidkomplex nach Anspruch 1, wobei R ein C₁-C₄ Alkyl ist.

3. Magnesiumhalogenidkomplex nach Anspruch 1 oder 2, wobei in der Formel (II), das R₁ und R₂, die identisch oder unterschiedlich sind, C₁-C₁₀ lineares oder verzweigtes Alkyl sind; und das R₃ und R₄, die identisch oder unterschiedlich sind, C₁-C₁₀ lineares oder verzweigtes Alkyl oder C₆-C₁₀ Aryl sind.

4. Magnesiumhalogenidkomplex nach einem der Ansprüche 1-3, wobei m in einem Bereich von 1,5 bis 3,5 ist und n in einem Bereich von 0,02 bis 0,3 ist.

5. Magnesiumhalogenidkomplex nach Anspruch 1, wobei R ein C₁-C₄ Alkyl ist, X Chlorid ist, m in einem Bereich von 1,5 bis 3,5 ist und n in einem Bereich von 0,02 bis 0,3 ist.

6. Verfahren zum Herstellen des Magnesiumhalogenidkomplexes nach Anspruch 1, das Verfahren umfasst die Schritte von:
(i) Herstellen einer Schmelze eines Magnesiumhalogenidkomplexes durch:
Mischen eines Magnesiumhalogenids, eines Alkohols, einer gem-Dihydrocarbyloxy-Kohlenwasserstoffverbindung und eines inerten Mediums in einem verschlossenen Reaktor und Erwärmen der resultierenden Mischung, während des Rührens, auf eine Temperatur von 100 bis 140°C, um eine Schmelze eines Magnesiumhalogenidkomplexes zu bilden,
wobei das Magnesiumhalogenid ausgewählt wird aus der Gruppe bestehend aus Magnesiumdichlorid, Magnesiumdibromid und Derivaten von Magnesiumdichlorid und Magnesiumdibromid, die durch Ersetzen von einem oder mehreren Halogenatomen von Magnesiumdichlorid oder Magnesiumdibromid mit C₁-C₁₄ Alkyl, Aryl, Alkoxy oder Aryloxy gebildet wurden;
wobei der Alkohol dargestellt ist durch die Formel ROH, in der R C₁-C₁₂ Alkyl, C₃₋C₁₀ Cycloalkyl oder C₆-C₁₀ Aryl ist;
wobei die gem-Dihydrocarbyloxy-Kohlenwasserstoffverbindung eine allgemeine Formel (II): 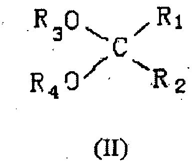 aufweist,
in der das R₁ und R₂, die identisch oder unterschiedlich sind, Wasserstoff oder C₁-C₁₀ lineares oder verzweigtes Alkyl, C₃-C₁₀ Cycloalkyl, C₆-C₁₀ Aryl, C₇-C₁₀ Alkylaryl oder Arylalkyl sind, wobei Aryl, Alkylaryl und Arylalkyl optional durch ein oder mehrere Halogenatome am aromatischen Ring substituiert sind; das R₁ und R₂ optional aneinander gebunden sind, um einen Ring oder ein fusioniertes Ringsystem zu bilden; das R₃ und R₄ die gleichen Bedeutungen haben, wie sie für R₁ und R₂ definiert sind, mit Ausnahme von Wasserstoff;
wobei das inerte Medium ausgewählt ist aus der Gruppe bestehend aus Kerosin, Parafinöl, Vaselineöl und Weißöl, und optional organische Silikonverbindung enthält; und
wobei das Magnesiumhalogenid in einer Menge von 0,1 bis 1,0 mol/Liter des inerten Mediums zugegeben wird und der Alkohol und die gem-Dihydrocarbyloxy-Kohlenwasserstoffverbindung in einer Menge von 1 bis 5 mol und beziehungsweise von 0,005 bis 1 mol in Bezug zu einem mol Magnesiumhalogenid zugegeben werden; und
(ii) Bilden von Partikeln des Magnesiumhalogenidkomplexes durch:
Anwenden von Scherwirkung auf die obige Schmelze des Magnesiumhalogenidkomplexes und anschließend Auslassen in ein Kühlmedium, um spherische Partikel des Magnesiumhalogenidkomplexes zu bilden, wobei das Kühlmedium bei einer Temperatur von -60°C bis 30°C, vor dem In-Kontakt-bringen mit dem Schmelzstrom des Magnesiumhalogenidkomplexes, kontrolliert wird.

7. Katalysatorkomponente, die nützlich in der Olefinpolymerisation ist, umfassend ein Reaktionsprodukt des Magnesiumhalogenidkomplexes nach Anspruch 1, mindestens eine Titanverbindung und einen optionalen internen Elektronendonator.

8. Katalysatorkomponente nach Anspruch 7, wobei in der Formel (I) R ein C₁-C₄ Alkyl ist.

9. Katalysatorkomponente nach Anspruch 7 oder 8, wobei in der Formel (II) R₁ und R₂, die identisch oder unterschiedlich sind, C₁-C₁₀ lineares oder verzweigtes Alkyl sind; und R₃ und R₄, die identisch oder unterschiedlich sind, C₁-C₁₀ lineares oder verzweigtes Alkyl oder C₆-C₁₀ Aryl sind.

10. Katalysatorkomponente nach einem der Ansprüche 7-9, wobei in der Formel (I) m in einem Bereich von 1,5 bis 3,5 ist und n in einem Bereich von 0,02 bis 0,3 ist.

11. Katalysatorkomponente nach Anspruch 7, wobei in der Formel (I) R ein C₁-C₄ Alkyl ist, X Chlorid ist, m in einem Bereich von 1,5 bis 3,5 ist und n in einem Bereich von 0,02 bis 0,3 ist.

12. Katalysatorkomponente nach einem der Ansprüche 7-11, wobei die Titanverbindung mindestens eine ist, die durch Formel TiX₃ oder Formel Ti(OR³)₄₋ₘXₘ dargestellt wird, in der R³(s) unabhängig C₁-C₁₄ aliphatische(r) Kohlenwasserstoffrest(e) ist/sind, X(s) unabhängig F, Cl, Br oder I ist/sind und m eine ganze Zahl von 1 bis 4 ist.

13. Katalysatorkomponente nach einem der Ansprüche 7-12, wobei der interne Elektronendonator ausgewählt ist aus der Gruppe bestehend aus Estern, Ethern, Ketonen und Aminen.

14. Katalysatorkomponente nach einem der Ansprüche 7-12, wobei der interne Elektronendonator mindestens einer ist, ausgewählt aus der Gruppe bestehend aus Estern von aliphatischen und aromatischen mono- und poly-basischen Carbonsäuren, Estern von aliphatischen und aromatischen Polyolen und Diethern.

15. Katalysatorkomponente nach Anspruch 14, wobei der interne Elektronendonator mindestens einer ist, ausgewählt aus der Gruppe bestehen aus:
Benzoaten, Phthalaten, Malonaten, Succinaten, Glutaraten, Pivalaten, Adipaten, Sebacaten, Maleaten, Naphthalendicarboxylaten, Trimellitaten, Benzol-1,2,3-tricarboxylaten, Pyromellitaten und Carbonaten;
Estern von Polyolen, dargestellt durch die allgemeine Formel (III), 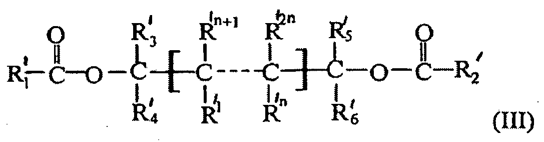
wobei R'₁ bis R'₆ und R'¹ bis R'²ⁿ, die identisch oder unterschiedlich sind, Wasserstoff, Halogen oder optional substituiertes lineares oder verzweigtes C₁-C₂₀ Alkyl, C₃-C₂₀ Cycloalkyl, C₆-C₂₀ mono-Ring- oder multi-Ringaryl, C₇-C₂₀ Alkylaryl, C₇-C₂₀ Arylalkyl, C₂-C₁₀ Alkenyl oder C₂-C₁₀ Estergruppe sind, mit der Bedingung, dass R'₁ und R'₂ nicht Wasserstoff sind; R'₃ bis R'₆ und R'¹ bis R'²ⁿ optional ein oder mehrere Heteroatome umfassen, die ausgewählt sind aus der Gruppe bestehend aus Stickstoff, Sauerstoff, Schwefel, Silicium, Phosphor und Halogen, die Kohlenstoff oder Wasserstoff oder beides ersetzen, und ein oder mehrere von R'₃ bis R'₆ und R'¹ bis R'²ⁿ optional verknüpft sind, um einen Ring zu bilden; und n eine ganze Zahl im Bereich von 0 bis 10 ist; und
1,3-Dietherverbindungen, dargestellt durch die allgemeine Formel (VI) 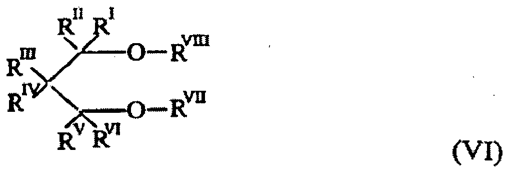 wobei R^{I}, R^{II}, R^{III}, R^{IV}, R^{V} und R^{VI}, die identisch oder unterschiedlich sind, ausgewählt sind aus der Gruppe bestehend aus Wasserstoff, Halogen, lineares oder verzweigtes C₁-C₂₀ Alkyl, C₃-C₂₀ Cycloalkyl, C₆-C₂₀ Aryl, C₇-C₂₀ Alkylaryl und C₇-C₂₀ Arylalkyl und R^{VII} und R^{VIII}, die identisch oder unterschiedlich sind, ausgewählt sind aus der Gruppe bestehend aus linearem oder verzweigtem C₁-C₂₀ Alkyl, C₃-C₂₀ Cycloalkyl, C₆-C₂₀ Aryl, C₇-C₂₀ Alkylaryl und C₇-C₂₀ Arylalkyl; und
zwei oder mehrere von R¹ bis R^{VI} optional aneinander gebunden sind, um einen Ring zu bilden.

16. Katalysator zur Polymerisation eines Olefins der Formel CH₂=CHR, wobei R H, oder Alkyl oder Aryl mit 1 bis 12 Kohlenstoffatomen ist, umfassend ein Reaktionsprodukt der folgenden Komponenten:
a) Die Katalysatorkomponente nach einem der Ansprüche 7 bis 15;
b) Ein Alkylaluminium-Cokatalysator; und
c) Optional, ein externer Elektronendonator.

17. Verfahren zum Polymerisieren von einem Olefin, umfassend In-Kontakt-bringen eines Olefins der Formel CH₂=CHR, wobei R H, oder Alkyl oder Aryl mit 1 bis 12 Kohlenstoffatomen ist, und optional eine andere Art des Olefins als Comonomer, und optional ein Dien als ein zweites Comonomer, mit dem Katalysator nach Anspruch 16 unter Polymerisierungsbedingungen.

## Revendications

1. Complexe d'halogénure de magnésium, ayant une composition représentée par la formule (I) :
MgX₂.mROH.nE.pH₂O (I)
dans laquelle
X est un chlorure, un bromure, ou un alcoxy en C₁ à C₁₄ ou un aryloxy ;
R est un alkyle en C₁ à C₁₂, un cycloalkyle en C₃ à C₁₀ ou un aryle en C₆ à C₁₀;
E est un composé hydrocarboné gem-dihydrocarbyloxy représenté par la formule (II) 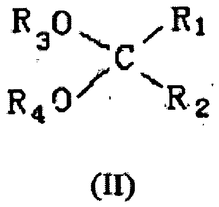
dans laquelle R₁ et R₂, qui sont identiques ou différents, sont un hydrogène ou un alkyle en C₁ à C₁₀ linéaire ou ramifié, un cycloalkyle en C₃ à C₁₀, un aryle en C₆ à C₁₀, un alkylaryle en C₇ à C₁₀ ou un arylalkyle, ledit aryle, alkylaryle et arylalkyle étant facultativement substitué avec un ou plusieurs atomes d'halogène sur le cycle aromatique ; et R₁ et R₂ sont facultativement liés l'un à l'autre pour former un cycle ou un système de cycles condensés ; R₃ et R₄ ont les mêmes significations que celles définies pour R₁ et R₂ autres que l'hydrogène ;
m est situé dans une plage allant de 1 à 5 ;
n est situé dans une plage allant de 0,005 à 1,0 ; et
p est situé dans une plage allant de 0 à 0,8.

2. Complexe d'halogénure de magnésium selon la revendication 1, dans lequel R est un alkyle en C₁ à C₄.

3. Complexe d'halogénure de magnésium selon la revendication 1 ou 2, dans lequel, dans la formule (II), R₁ et R₂, qui sont identiques ou différents, sont un alkyle en C₁ à C₁₀ linéaire ou ramifié ; et R₃ et R₄, qui sont identiques ou différents, sont un alkyle en C₁ à C₁₀ linéaire ou ramifié ou un aryle en C₆ à C₁₀.

4. Complexe d'halogénure de magnésium selon l'une quelconque des revendications 1 à 3, dans lequel m est situé dans une plage allant de 1,5 à 3,5, et n est situé dans une plage allant de 0,02 à 0,3.

5. Complexe d'halogénure de magnésium selon la revendication 1, dans lequel R est un alkyle en C₁ à C₄, X est un chlorure, m est situé dans une plage allant de 1,5 à 3,5, et n est situé dans une plage allant de 0,02 à 0,3.

6. Procédé de préparation du complexe d'halogénure de magnésium selon la revendication 1, ledit procédé comprenant les étapes suivantes :
(i) la préparation d'une matière fondue d'un complexe d'halogénure de magnésium par :
le mélange, dans un réacteur fermé, d'un halogénure de magnésium, d'un alcool, d'un composé hydrocarboné gem-dihydrocarbyloxy et d'un milieu inerte, et le chauffage du mélange résultant tout en agitant à une température allant de 100 °C à 140 °C, pour former une matière fondue d'un complexe d'halogénure de magnésium, dans lequel l'halogénure de magnésium est choisi dans le groupe constitué du dichlorure de magnésium, du dibromure de magnésium et des dérivés du dichlorure de magnésium et du dibromure de magnésium formés en remplaçant un ou deux atomes d'halogène du dichlorure de magnésium ou du dibromure de magnésium par un alkyle en C₁ à C₁₄, un aryle, un alcoxy ou un aryloxy ;
dans lequel l'alcool est représenté par la formule ROH, dans laquelle R est un alkyle en C₁ à C₁₂, un cycloalkyle en C₃ à C₁₀ ou un aryle en C₆ à C₁₀ ;
dans lequel le composé hydrocarboné gem-dihydrocarbyloxy a une formule générale (II) : 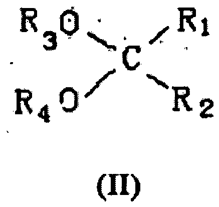
dans laquelle R₁ et R₂, qui sont identiques ou différents, sont un hydrogène ou un alkyle en C₁ à C₁₀ linéaire ou ramifié, un cycloalkyle en C₃ à C₁₀, un aryle en C₆ à C₁₀, un alkylaryle en C₇ à C₁₀ ou un arylalkyle, ledit aryle, alkylaryle et arylalkyle étant facultativement substitué avec un ou plusieurs atomes d'halogène sur le cycle aromatique ; R₁ et R₂ sont facultativement liés l'un à l'autre pour former un cycle ou un système de cycles condensés ; R₃ et R₄ ont les mêmes significations que celles définies pour R₁ et R₂ autres que l'hydrogène ;
dans lequel le milieu inerte est choisi dans le groupe constitué du kérosène, d'une huile de paraffine, d'une huile de vaseline et d'une huile blanche, et contient facultativement un composé de silicium organique ; et
dans lequel l'halogénure de magnésium est ajouté en une quantité de 0,1 à 1,0 mol/l du milieu inerte, et l'alcool et le composé hydrocarboné gem-dihydrocarbyloxy sont ajoutés en une quantité de 1 à 5 moles et de 0,005 à 1 mole, respectivement, par rapport à une mole d'halogénure de magnésium ; et
(ii) la formation de particules du complexe d'halogénure de magnésium par :
l'application d'une action de cisaillement à la matière fondue du complexe d'halogénure de magnésium susmentionnée, puis son déchargement dans un milieu de refroidissement, pour former des particules sphériques du complexe d'halogénure de magnésium, dans lequel le milieu de refroidissement est régulé à une température de -60 °C à 30 °C avant son contact avec le courant de matière fondue de complexe d'halogénure de magnésium.

7. Composant catalytique utilisé dans la polymérisation des oléfines, comprenant un produit réactionnel du complexe d'halogénure de magnésium selon la revendication 1, d'au moins un composé de titane et d'un donneur d'électron interne facultatif.

8. Composant catalytique selon la revendication 7, dans lequel, dans la formule (I), R est un alkyle en C₁ à C₄.

9. Composant catalytique selon la revendication 7 ou 8, dans lequel, dans la formule (II), R₁ et R₂, qui sont identiques ou différents, sont un alkyle en C₁ à C₁₀ linéaire ou ramifié ; et R₃ et R₄, qui sont identiques ou différents, sont un alkyle en C₁ à C₁₀ linéaire ou ramifié ou un aryle en C₆ à C₁₀.

10. Composant catalytique selon l'une quelconque des revendications 7 à 9, dans lequel, dans la formule (I), m est situé dans une plage allant de 1,5 à 3,5, et n est situé dans une plage allant de 0,02 à 0,3.

11. Composant catalytique selon la revendication 7, dans lequel, dans la formule (I), R est un alkyle en C₁ à C₄, X est un chlorure, m est situé dans une plage allant de 1,5 à 3,5, et n est situé dans une plage allant de 0,02 à 0,3.

12. Composant catalytique selon l'une quelconque des revendications 7 à 11, dans lequel le composé de titane est au moins un composé représenté par la formule TiX₃ ou la formule Ti(OR³)ₐ₋ₘXₘ dans laquelle le ou les R³ est/sont indépendamment un hydrocarbyle aliphatique en C₁ à C₁₄, le ou les X est/sont indépendamment F, Cl, Br ou I, et m est un nombre entier allant de 1 à 4.

13. Composant catalytique selon l'une quelconque des revendications 7 à 12, dans lequel le donneur d'électron interne est choisi dans le groupe constitué des esters, des éthers, de cétones et des amines.

14. Composant catalytique selon l'une quelconque des revendications 7 à 12, dans lequel le donneur d'électron interne est au moins un donneur d'électron interne choisi dans le groupe constitué des esters d'acides carboxyliques mono- et polybasiques aliphatiques et aromatiques, des esters de polyols aliphatiques et aromatiques, et des di-éthers.

15. Composant catalytique selon la revendication 14, dans lequel le donneur d'électron interne est au moins un donneur d'électron interne choisi dans le groupe constitué :
des benzoates, des phtalates, des malonates, des succinates, des glutarates, des pivalates, des adipates, des sébacates, des maléates, des naphtalènedicarboxylates,
des trimellitates, des benzène-1,2,3-tricarboxylates, des pyromellitates et des carbonates ;
des esters de polyols représentés par la formule générale (III), 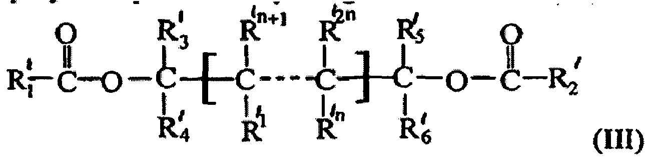
dans laquelle R'₁ à R'₆ et R'¹ à R'²ⁿ, qui sont identiques ou différents, sont un hydrogène, un halogène ou un alkyle en C₁ à C₂₀ linéaire ou ramifié facultativement substitué, un cycloalkyle en C₃ à C₂₀, un aryle monocyclique ou polycylique en C₆ à C₂₀, un alkylaryle en C₇ à C₂₀, un arylalkyle en C₇ à C₂₀, un alcényle en C₂ à C₁₀ ou
un groupe ester en C₂ à C₁₀, à condition que R'₁ et R'₂ ne soient pas un hydrogène ; R'₃ à R'₆ et R'¹ à R'²ⁿ comprennent facultativement un ou plusieurs hétéroatomes qui sont choisis dans le groupe constitué de l'azote, de l'oxygène, du soufre, du silicium, du phosphore et d'un halogène, remplaçant un carbone ou un hydrogène ou les deux, et un ou plusieurs parmi R'₃ à R'₆ et R'¹ à R'²ⁿ sont liés facultativement pour former un cycle ; et n est un nombre entier allant de 0 à 10 ; et
des composés de 1,3-diéthers représentés par la formule générale (VI), 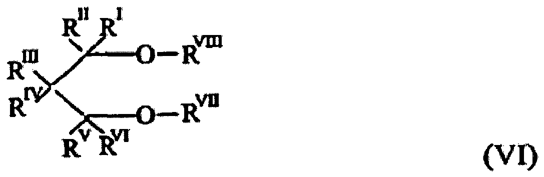 dans laquelle R^{I}, R^{II}, R^{III}, R^{IV}, R^{V} et R^{VI}, qui sont identiques ou différents, sont choisis dans le groupe constitué d'un hydrogène, d'un halogène, d'un alkyle en C₁ à C₂₀ linéaire ou ramifié, d'un cycloalkyle en C₃ à C₂₀, d'un aryle en C₆ à C₂₀, d'un alkylaryle en C₇ à C₂₀ et d'un arylalkyle en C₇ à C₂₀, et R^{VII} à R^{VIII}, qui sont identiques ou différents, sont choisis dans le groupe constitué d'un alkyle en C₁ à C₂₀ linéaire ou ramifié, d'un cycloalkyle en C₃ à C₂₀, d'un aryle en C₆ à C₂₀, d'un alkylaryle en C₇ à C₂₀ et d'un arylalkyle en C₇ à C₂₀; et
deux ou plus de deux parmi R^{I} à R^{VI} sont facultativement liés l'un à l'autre pour former un cycle.

16. Catalyseur pour la polymérisation d'une oléfine de formule CH₂=CHR, dans laquelle R est H ou un alkyle ou un aryle contenant 1 à 12 atomes de carbone, comprenant un produit réactionnel des composants suivants :
a) le composant catalytique selon l'une quelconque des revendications 7 à 15 ;
b) un cocatalyseur d'alkylaluminium ; et
c) facultativement, un donneur d'électron externe.

17. Procédé de polymérisation d'une oléfine, comprenant le contact d'une oléfine de formule CH₂=CHR, dans laquelle R est H ou un alkyle ou un aryle contenant 1 à 12 atomes de carbone, et facultativement d'un autre type de ladite oléfine en tant que comonomère, et facultativement d'un diène en tant que second comonomère, avec le catalyseur selon la revendication 16 dans des conditions de polymérisation.
